# EUROPEAN PATENT SPECIFICATION

(11) **EP 2 509 737 B1**
(45) Date of publication and mention of the grant of the patent: **12.04.2017**
(21) Application number: 10813074.1
(22) Date of filing: 09.12.2010
(51) Int. Cl.: B23K 9/02, B23K 9/08, B23K 9/167, B23K 9/32

(54) **INTEGRATED SHIELDING GAS AND MAGNETIC FIELD DEVICE AND WELDING SYSTEM FOR DEEP GROOVE WELDING**
INTEGRIERTE SCHUTZGAS- UND MAGNETFELDVORRICHTUNG SOWIE SCHWEISSUNGSSYSTEM FÜR TIEFNUTSCHWEISSEN
DISPOSITIF ET SYSTÈME DE SOUDAGE AVEC CHAMP MAGNÉTIQUE ET GAZ DE PROTECTION INTÉGRÉS POUR SOUDAGE À RAINURE PROFONDE

(30) Priority: 09.12.2009 US 267960 P; 24.11.2010 US 954076
(43) Date of publication of application: 17.10.2012
(73) Proprietor: Lincoln Global, Inc., City of Industry, CA 91748 (US)
(72) Inventor: MILLER, Victor, Bonita CA 91902 (US); LITKE, Lane, Chula Vista CA 91910 (US)
(74) Representative: Grosse Schumacher Knauer von Hirschhausen
(86) International application number: PCT/IB2010/003187
(87) International publication number: WO 2011/070434

(56) References cited:
- JP-A- 10 249 522
- JP-A- 58 181 472
- JP-A- 58 205 679
- JP-A- 60 191 677
- JP-U- 59 143 577
- DATABASE WPI Week 200962 Thomson Scientific, London, GB; AN 2009-N26283 XP002635320, -& CN 201 295 811 Y (UNIV CHONGQING) 26 August 2009 (2009-08-26)

## Description

The present invention relates to a welding arc manipulation unit according to the preamble of claim 1 (see, for example, JP58/181472 A), and to a welding system having such welding arc manipulation unit, see claim 10.

### Description of the Related Art

When welding in large industrial applications, such pipe or plate welding, it is often necessary to weld together very thick work pieces. Thicknesses can be as high as 4 inches or more. Thick work piece welding requires that a filler weld be made for the entire depth of the work pieces to be welded together. Moreover, the work pieces to be welded often have an angled face - that is two angled faces are welded to each other - and the filler weld is to fill the entire gap between the work pieces created by the angled faces of the work pieces. Because larger gaps between work pieces require more time to fill in the welding process they are less desirable and it is desired to make the gap between work pieces as narrow as possible. However, when trying to weld narrow gap- thick walled work pieces there is difficulty in maintaining arc stability, ensuring sufficient sidewall penetration and delivering shielding gas to the weld such that quality and efficient welds can be easily made. There is great difficulty, with existing systems, in efficiently and effectively delivering a stable welding arc that is sufficiently shielded in narrow-deep grooved gaps.

### BRIEF SUMMARY OF THE INVENTION

In order to achieve an acceptable weld and in particular to allow for easy and consistent thick walled and/or narrow gap welding of a work piece, a welding arc manipulation unit according to claim 1 and a welding system having such arc welding manipulation unit according to claim 10 is proposed. Preferable features may be taken from claims 2 to 9 as far as the welding arc manipulation unit is concerned, and from claims 2 to 9 as far as the welding arc manipulation unit is concerned. For the latter one, it may be preferred, if said magnetic probe is magnetically coupled to said shielding gas tube 105 and/or said magnetic probe comprises a plurality of laminate plates secured to each other and/or at least some of said laminate plates have different lengths from other of said laminate plates and/or the welding system further comprising a housing which encloses said coil and/or if at least one of said housing and said support structure comprises a coolant manifold structure to allow for the flow of a coolant through said coolant manifold structure and/or if at least one of said magnetic probe and said shielding gas tube is made from a high silicon steel and/or said magnetic coil is at least partially encased in a thermally absorbent potting material and/or if at least some of said laminate plates are made from a high silicon steel and/or said magnetic probe has a thickness near said support structure which is larger than a thickness at a point away from said support structure and/or said support structure comprises a coolant manifold structure to allow for the flow of a coolant through said coolant manifold structure. An exemplary embodiment of the present invention is a welding arc manipulation unit, and a system containing the welding arc manipulation unit, where the unit has a support structure which supports a magnetic coil which generates a magnetic field in response to an electrical current and a magnetic probe magnetically coupled to the magnetic coil and extending below the support structure such that the magnetic probe can extend into a welding gap to deliver a magnetic field to a welding arc. The unit also has a shielding gas tube coupled to and extending below the support structure such that the shielding gas tube can extend into the welding gap to deliver shielding gas to the welding arc.

### BRIEF DESCRIPTION OF THE DRAWINGS

The above and/or other aspects of the invention will be more apparent by describing in detail exemplary embodiments of the invention with reference to the accompanying drawings, in which:
FIG. 1 illustrates a diagrammatical representation of a narrow gap thick walled weld joint and work piece;
FIG. 2 illustrates a diagrammatical representation of a magnetic field generation unit in accordance with an exemplary embodiment of the present invention;
FIG. 3 illustrates a diagrammatical representation of a side view of the unit of FIG. 2;
FIG. 3A illustrates a diagrammatical representation of a shape of a shielding gas and tube of an exemplary embodiment of the present invention;
FIG. 4 illustrates a diagrammatical representation of an exploded view of the unit of FIG. 2;
FIG. 5 illustrates a diagrammatical representation of an exemplary embodiment of the present invention in a welding operation;
FIG. 6 illustrates a diagrammatical representation of another view of the welding operation of FIG. 5; and
FIG. 7 illustrates a diagrammatical representation of a welding system in accordance with an exemplary embodiment of the present invention.

### DETAILED DESCRIPTION OF EXEMPLARY EMBODIMENTS

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

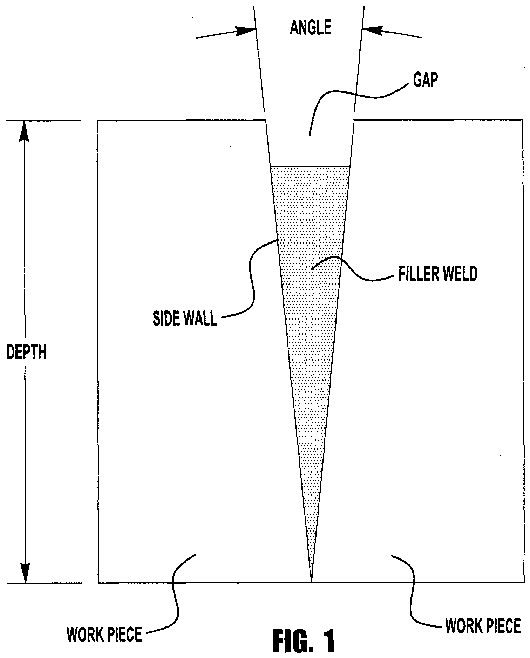

Figure 1 is a representative diagrammatical cross-section of a narrow gap thick walled weld as discussed in the present application. As can be seen, two adjacent work pieces have a facing side walls, each having an angled face. The side walls are angled to allow for welding at the deepest part of the gap. Typically, welding is considered thick walled when the gap has a depth of 1 inch or more. Further, welding is typically considered narrow gap welding when the angle between the facing sidewalls is 20 degrees or less. It should be noted that embodiments of the present invention are not limited to welding applications of these respective dimensions, but rather can be used in any appropriate welding application so long as the desired welding results are achieved.

To achieve an acceptable weld, it is typically required that the weld penetration of the respective side walls be similar in the facing sidewalls and that the weld beads used to fill the gap be uniform and consistent. Moreover, it is desirable that the weld be performed in an inert atmosphere so that the oxygen and nitrogen in the air do not contaminate the weld. To accomplish each of these goals in the deepest parts of a narrow gap weld can be extremely difficult because of the difficulty in controlling the welding arc and because of the difficulty in delivering the shielding gas to the deepest parts of the gap. This is especially true when welding in a 2G, or similar welding position. Various embodiments of the present invention, discussed more fully below, address each of these issues and allows easy and consistent thick walled-narrow gap welding of work pieces.

Because thick walled-narrow gap welding is typically done using a tungsten inert gas welding process (TIG), the various embodiments below will focus on TIG welding applications. However, the present invention is not limited in this regard as embodiments of the present invention can also be employed in other welding processes, such as MIG welding.

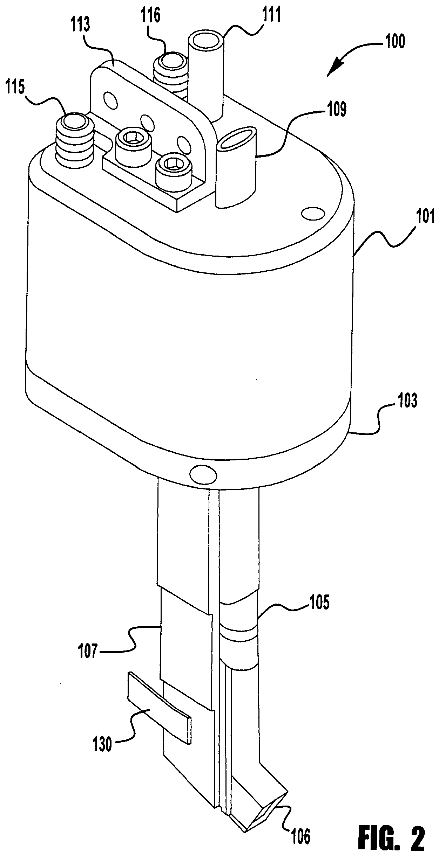

Turning now to Figure 2, an integral arc manipulation unit 100 in accordance with an exemplary embodiment of the present invention is shown. The arc manipulation unit 100 is comprised of a number of components including a magnetic coil housing 101, a magnetic coil support 103, a shielding gas tube 105 and nozzle 106, and a magnetic field probe 107. The housing 101 has a bracket structure 113 used to secure the unit 100 to a welding head assembly (not shown). The bracket 113 can be positioned and configured as desired based on the structure of the welding head assembly to which it is secured to. This will be discussed further below.

Inserted into the housing 101 is gas inlet 109, which is coupled to the gas tube 105, an electrical conduit inlet 111, and coolant tube inlet 115 and coolant tube outlet 116. Each of these components will be discussed further below.

The arc manipulation unit 100 employs both magnetic field control and proximate shielding gas delivery to achieve optimal weld quality in narrow gap - thick walled welds. This will be discussed more fully below.

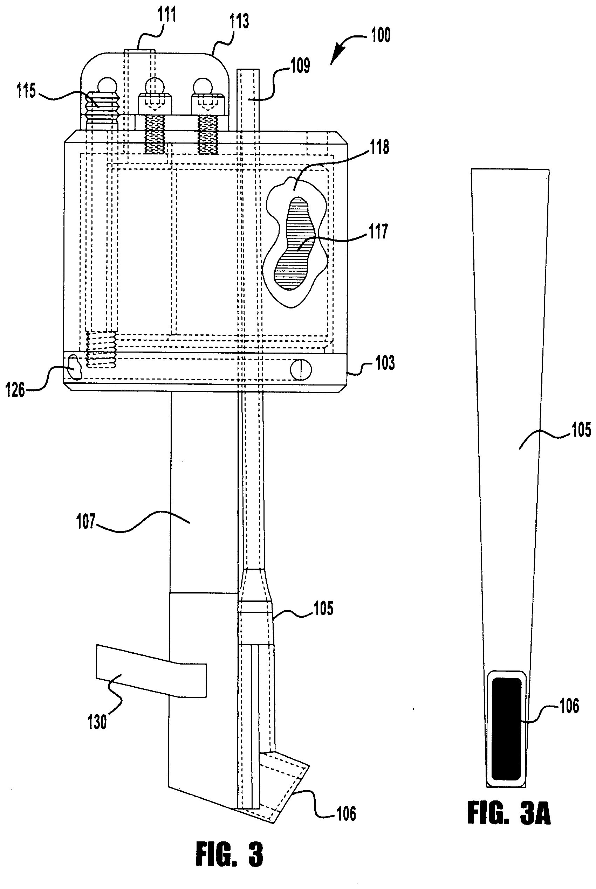

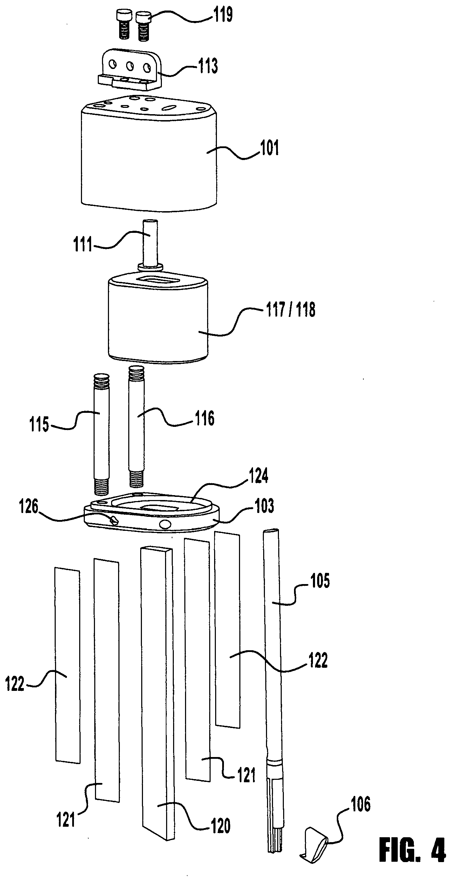

Turning now to Figures 3 and 4, a more detailed discussion of the components of the arc manipulation unit 100 is provided.

As discussed above, the unit 100 provides shielding gas delivery and magnetic field control and/or manipulation of a welding arc. The shielding gas is provided to the arc via the gas inlet 109, gas tube 105 and nozzle 106. Typically, the shielding gas is provided from a gas source (not shown) to the inlet 109. The inlet 109 is coupled to the gas tube 105 which extends down through the housing 101 and extends below the housing 101 and support 103. The tube 105 ends with a nozzle 106 that directs the shielding gas to the welding arc so as to provide adequate shielding. It is noted that although the separate components inlet 109, tube 105 and nozzle 106 are discussed here, it is contemplated that the gas delivery structure can be formed integrally as a single unit. That is, in other exemplary embodiments, the tube, inlet and nozzle are formed as a single unit, so long as the shielding gas is delivered remotely to the welding arc. As shown in the embodiment depicted in Figs. 3 and 4 the nozzle 106 is angled so as to point away from the housing and down towards a weld bead during welding. However, in other exemplary embodiments of the present invention, the nozzle 106 has an adjustable orientation. This adjustability allows the nozzle 106 to be oriented by a user to provide optimal shielding gas delivery during a welding operation. Thus, based on the welding operation to be performed, the operator has the flexibility to orient the nozzle 106 to a desired position to provide the desired shielding gas delivery. The adjustability can be achieved by any known means, including using a latching, cam type or gearing structure, which permits the angle of the nozzle 106 to be adjusted and held steady after adjustment.

The cross-section of the internal area of the tube 105 and nozzle 106 are to be such to ensure sufficient delivery of shielding gas to the welding arc. In an exemplary embodiment of the present invention, the cross-section of the tube 105 and nozzle 106 is rectangular, oval, elliptical or rectangular with rounded edges (or similarly shaped). This shaping permits the nozzle 106 and tube 105 to be inserted deeper into a weld gap. Thus, in exemplary embodiments of the present invention, the shaping of the nozzle 106 and tube 105 are optimized to allow for the deepest penetration possible in a weld gap. This ensures that the shielding gas is delivered to the welding arc as close as possible to optimize shielding.

In an exemplary embodiment of the present invention, the tube 105 and/or nozzle 106 have a trapezoidal shape when viewed from the front or back of the unit 100. That is, the tube 105 and/or nozzle 106 are wider at the top (nearer the unit) and narrower at the bottom (near the weld). This can be seen in Figure 3A. This shape allows for the optimization of structural stability, while at the same time ensures as deep a penetration as possible into a weld gap. The length of the tube 105, below the housing 101 and plate or support 103 is determined to provide optimal shielding gas delivery to a weld. That is, for welding with deeper gaps a longer tube 105 may be needed or used. The nozzle 106 is to have a shape which provides adequate shielding to the arc, and the shape is not limited to that shown in Figures 2-4 of the present application. Further, although not shown, it is also contemplate that nozzle 106 and/or tube 105 has an additional port or nozzle opposite the nozzle 106 shown in the figures to provide for trailing shielding gas. In some applications it may be desirable to provide additional trailing shielding gas to continue to shield the weld pool during cooling. Thus embodiments of the present invention may have an additional nozzle or port on the nozzle 106 or tube 105 to provide this shielding.

In an exemplary embodiment of the present invention, the tube 105 and/or nozzle 106 is easily replaceable, allowing for replacement due to damage or wear or due to different tooling requirements. That is, it is contemplated that tubes 105 of different length can be provided to a user who can easily replace the tube 105 and/or nozzle 106 depending on the depth and/or shape of the gap to be welded. In fact, it is contemplated that tubes can be replaced for welding of the same gap. For example, as the gap gets shallower different nozzles/tubes can be employed to optimize welding. To facilitate this replaceability, in exemplary embodiments the tube 105 can be threaded into the plate 103, such that it can be easily screwed out to be replaced with a new part or a different part depending on the welding operation. In further embodiments, the tube 105 is secured to the plate 103 and/or housing 101 via known means, such as fasteners, etc. to allow for its replaceability.

In exemplary embodiments of the present invention, the inlet 109, tube 105, and nozzle 106 are made from steel which is magnetic. This ensures that the components can withstand the high temperatures associated with being close to a welding operation and will aid in the delivery of a magnetic field - which will be discussed in more detail below. For example, the tube 105 and/or the nozzle 106 can be made from high silicon steel. The present invention is not limited to the use of steel, as other materials can be suitable for this application. However, the materials selected should be of a type that can withstand high temperatures without losing significant structural integrity or shape, and of a type that propagates magnetic fields, or at least does not interfere with magnetic fields.

Secured to the back of the tube 105 is the magnetic field probe 107. The magnetic field probe 107 is also to be made from steel, or other materials, which can withstand high temperatures while also emitting a magnetic field. For example, the probe 107 can be made from high silicon steel, of the type often employed in electrical transformers. As discussed further below, the probe 107 provides a magnetic field close to the welding arc that is used to stabilize the welding arc and manipulate the movement of the arc from side-to-side to ensure that the each sidewall of the work pieces has, according to the present invention, sufficient and consistent penetration during welding. In an exemplary embodiment, the probe 107 is secured to the tube 105 via welding or other suitable means, and an upper portion of the probe 107 extends into the housing 101 a sufficient distance so as to engage a magnetic coil 117.

Like the tube 105/nozzle 106, in exemplary embodiments of the present invention, the probe 107 has a trapezoidal shape when viewed from the front of the unit 100. That is, the probe 107 is narrowest at its lowest end and its width increases as it nears the housing 101. In some exemplary embodiments, the probe 107 has a constant cross-section within the housing 101, or has a constant cross-section at the portion which is engaged by the coil 117. In other exemplary embodiments, the probe has a constant cross-section throughout its length. The overall shape of the probe 107 should be optimized to deliver the desired magnetic field to manipulate the welding arc.

In the embodiment shown in Figs. 3 and 4 the probe 107 is comprised of a plurality of magnetic laminates 120, 121, 122 (for example high silicon steel), rectangular in shape and having different lengths, such that when they are assembled the probe 107 has essentially a trapezoidal shape with a thicker cross-section near the housing 101 than at its proximal end (near the nozzle 106). These laminates are secured to each, for example via welding, so as to create a near solid probe 107. However, in other exemplary embodiments the probe 107 can be machined from a single stock of magnetic material. The present invention is not limited by the specific method of construction of the probe 107 in this regard.

Similar to the tube 105, the length of the probe 107 is to be such that it penetrates into the weld gap significantly so as to allow a generated magnetic field (discussed later) to stabilize and manipulate the welding arc. In some exemplary embodiments the probe 107 has a shorter length than the tube 105 and nozzle 106. That is, as shown in Fig. 3, the probe 107 does not extend below the bottom of the nozzle 106. In any event, the probe 107 should have a length such that the probe 107 does not impact with the weld bead in the gap during operation.

The size or mass of the probe 107 can also be varied to enhance the gauss strength of a magnetic field of the probe 107. For example, when welding with higher amperages (for example in the range of 400 to 500 amps) a stronger magnetic field is usually required to manipulate the arc, thus it may be necessary to have a probe with a larger size. Thus, as stated above, the overall shape and sizing of the probe 107 is to be a function of the desired operational parameters of the probe 107 and the unit 100 as a whole.

Additionally, although in Figures 2-4, the probe 107 is shown behind the tube 105 and nozzle 106, the present invention is not limited to this configuration. In alternative embodiments of the present invention, the probe 107 is positioned closer to the welding arc than the tube 105 so as to move the magnetic field of the probe 107 closer to the arc. However, in such an embodiment the nozzle 106 should be positioned and configured to ensure sufficient and adequate delivery of shielding gas to the welding arc.

Moreover, as with the tube 105, in exemplary embodiments of the present invention the probe 107 can be removable from the housing 101 to allow for replacement due to damage and to allow for probes 107 of varying lengths to be installed to facilitate welding in gaps of different depths. For example, the probe 107 can be installed via bolts, screws or other similar fasteners that can allow for the probe 107 to be easily removed.

In an exemplary embodiment of the present invention, the probe 107 is secured to the tube 105 so as to create an integral unit. For example, the probe 107 and the tube 105 can be welded together along their length extending below the support 103. In a further exemplary embodiment, the tube 105 and the probe 107 are welded to each other along a length sufficient to effectively magnetically couple the tube 105 to the probe 105 so that the tube 105 acts as part of the probe 107 in delivering the magnetic field to the arc. In such an embodiment, the entire probe/tube unit can be made removable and replaceable. In such an embodiment, the tube 105 becomes an extension of the probe 107 for purposes of emitting a magnetic field to stabilize and manipulate the welding arc. In other exemplary embodiments, where the probe 107 and tube 105 are not integral, it is contemplated that the tube 105 and probe 107 can be magnetically coupled via coupling devices (not shown) which aid in magnetically coupling the tube 105 to the probe 107. Examples of such devices include, metallic clips or fasteners.

In a further exemplary embodiment, coupled to either the tube 105 and/or the probe 107 are unit stabilizers 130. The stabilizers 130 are secured to either the tube 105 and/or the probe 107 and have an extension which extends between the tube 105 and/or the probe 107 and make contact with the sidewalls of the weld gap. The stabilizers 130 help stabilize and/or center the unit 100 during a welding operation. This is particularly advantageous when welding metals which are magnetic. Because of the generation of a magnetic field by the probe 107, it is possible (when welding magnetic materials) that the unit 100 may move towards one of the sidewalls. The stabilizers 130 will help maintain the unit 100 in a stable or centralized position. In an exemplary embodiment of the present invention the stabilizers 130 are made of a rigid, yet flexible, material to ensure that the unit remains stable, while at the same time accommodating the varying widths of a welding gap during a welding process. In a further exemplary embodiment, the stabilizers 130 are non-metallic, but resistant to high heat. In other embodiments, metallic stabilizers may be employed. Further, the stabilizers 130 are not limited to flexible members, but be of any configuration to provide stabilization and positional security, such as wheels or bearings, etc.

As stated above, the upper end of the probe 107 is inserted into a magnetic coil 117 which is located within the housing 101. The probe 107 is inserted into a central portion of the coil 117 such that when a magnetic field is generated by the coil 117 (via the use of an electrical current in the coil) the magnetic field is transferred from the coil 117 into the probe 107 such that a magnetic field is generated at the proximate end of the probe 107 (near the nozzle 106). It is this magnetic field which is used to manipulate and stabilize the arc. The structure and construction of the coil 117 is such that it is sufficient to create the needed magnetic field for arc control and manipulation. In an exemplary embodiment of the present invention, the coil 117 contains at least 1,100 wraps of 22 gauge high-temperature wire. Of course, the construction and parameters of the coil 117 are driven by the application and desired performance of the magnetic field to be generated and the properties discussed above are merely exemplary. The upper end of the probe107 is inserted into the coil 117 such that sufficient magnetic coupling occurs between the coil 117 and the probe 107.

In an exemplary embodiment, the coil 117 is then covered or wrapped with an electrical insulator (not specifically shown) so that the coil 117 is sufficiently electrically insulated. Any sufficient means of electrical insulation may be used, including tape, silicon, etc.

Additionally, in an exemplary embodiment of the present invention, the magnetic coil 117 (including the upper end of the probe 107 in some embodiments) is potted in a thermally insulative potting compound 118. As can be expected, the probe 107 and thus the coil 117 will be exposed to very high temperatures during the welding operation. Such a high temperature environment can affect both the structural integrity and the performance of the coil 117 and the probe 107. The presence of the thermally conductive potting compound 118 mitigates the affects of the high temperature environment by dissipating the heat from the coil 117 and/or probe 107. This aids in extending the life of the coil 117 and the probe 107. The present invention is not limited by the type of compound or thermal epoxy that can be used. Further, in additional exemplary embodiments of the present invention, the potting compound 118 fully fills the interior cavity of the housing 101. This further enhances the thermal protection of the coil 117 and the unit 100 as a whole.

In another exemplary embodiment of the present invention, at least some portion of the housing 101 contains a cavity (not shown) in which a camera or other sensor devices (such as a temperature sensor) can be secured. The use of a camera or other sensors allows for the unit 100 to also provide data regarding the welding operation. Of course, at least some openings in the housing 101 must be provided to allow the camera and/or sensors to function properly. However, these cavities may be closed or covered with a material to allow the sensors/camera to work, such as weld shield glass. In various embodiments of the present invention, the camera/sensors can be placed in a cavity within the housing, or can be located in a separate housing structure secured to the unit 100 or other structure on the welding carriage (not shown).

As shown in Figs. 3 and 4, the coil 117 is located on the coil support 103, through which each of the tube 105 and probe 107 pass through. The support 103 has a recess portion 124 in which the coil 117 is placed. The coil 117 can be secured to the support 103 via some mechanical means or can simply be retained in the support via the recess portion 124. Also, the support has at least two holes to allow for the probe 107 and the tube 105 to pass though.

Additionally, in exemplary embodiments of the present invention the support 103 has a manifold structure 126 for the flow of a coolant through the manifold structure 126. Specifically, a coolant, such as water, is provided to the coolant inlet 115 down into the housing 101 and into the manifold structure 126 of the support 103. The coolant is passed through the manifold structure 103 so as to cool the support 103, the coil 117 and the probe 107. The coolant can be of any type, including water, oil or other thermally conductive fluids. The manifold structure 126 may be configured as needed to allow for the flow of the coolant through the support 103. In additional embodiments of the present invention, not only is the manifold structure 126 in the support 103, but it can also be throughout the housing 101 to provide further thermal dissipation. The manifold structure 126 can be formed integrally with the support 103/housing 101 or can be a separate structure which is thermally coupled to the support 103 and/or the housing 101. It is also contemplated in other embodiments of the present invention that at least some manifold structure 126 is thermally coupled to the coil 117 and/or the upper portions of the probe 107 so as to provide further heat dissipation for these components. It is noted that the use of a coolant system as described above is not necessary to various embodiments of the present invention, but is desirable in many applications so as to lengthen the operational life of the components. The exact configuration, routing and structure of the coolant system and manifold structure 126 is a function of the heat dissipation needs in the unit 100 and can be configured as needed for specific applications and uses.

In an additional exemplary embodiment, the probe 107 has channeling internal to its structure which is coupled to the manifold structure 126 such that the coolant is passed down into the probe 107 during operation. This provides additional thermal dissipation for high heat applications. In yet a further exemplary embodiment, rather than the probe 107 having channeling for the coolant, the tube 105 is coupled to coolant channeling or manifold structure that aids in the removal of heat from the tube 105 and/or the probe 107 during operation.

Also coupled to the housing 101 is an electrical conduit inlet 111 which is used as an inlet for electrical connections, such as those needed for the coil 117.

The housing 101, inlet 111 and support 103 can be made from any suitable material, including aluminum and steel.

Further, although the embodiment shown in Figures 3 and 4 shows the support 103 and housing 101 as separate components, the present invention is not limited in this regard as these components can be integrally formed, or configured in other ways to perform the same function.

Mounted to the housing 101 is a bracket 113 using fasteners 119. The bracket is employed to secure the unit 100 to a weld head assembly (not shown) and can be configured as needed to secure the unit 100.

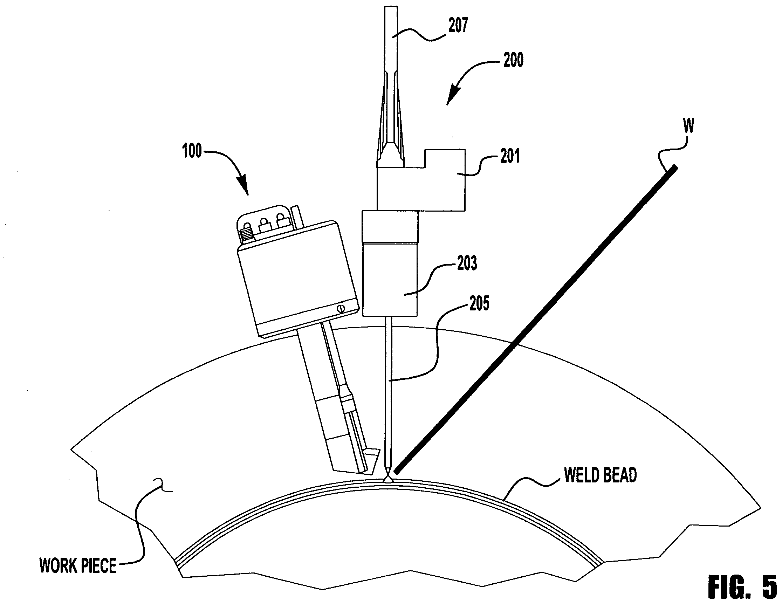

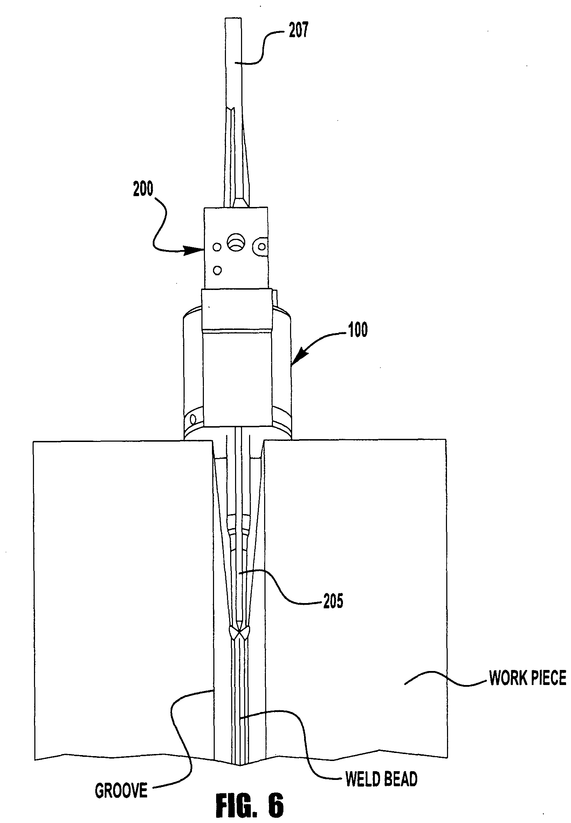

The function and operation of various embodiments of the present invention will now be discussed in reference to Figures 5, 6, and 7. As discussed previously the following discussion will be in the context of TIG welding, but the concepts of the present invention are not limited to TIG welding and can be employed in other welding applications. As shown in Figure 5, when welding a thick walled work piece the unit 100 is positioned near the welding head 200. The unit 100 and the welding head 200 are mounted to a common carriage (not shown) such that the placement of unit 100 relative to the weld head 200 does not change during a welding operation. This will ensure that the shielding gas and magnetic field provided by the unit 100 remains consistent throughout the welding operation. It is contemplated that the carriage (not shown) can allow for the easy adjustment of the relative positioning of the unit 100 with respect to the welding head 200 to increase the flexibility of a welding system employing the unit 100.

As shown, the welding head 200 comprises a tungsten welding electrode 205 (commonly used for TIG welding) which has a stick out length sufficient to weld at the appropriate depth of the welding gap. The electrode 205 is coupled to a welding torch head 201, which is coupled to an electrical connection 207 that connects the torch head 201 to a welding power supply 152. In exemplary embodiments of the present invention, a shielding gas cup 203 provides additional shielding gas to the weld zone.

During TIG welding, a filler wire W is inserted into the welding arc zone and is melted to contribute to the weld bead.

The power supply 152, torch head 201, electrode 205, connection 207, cup 203 and filler wire W are of types known by those skilled in the art, and the present invention is not limited in this regard.

During a welding operation, a weld head carriage (not shown) has both the weld head 200 and unit 100 secured to it and they are inserted into the gap of the weld to an appropriate height above the weld bead to be created. As known for TIG welding a welding power supply 152 provides a welding waveform to the torch head 201 and the electrode 205 which creates a welding arc between the electrode 205 and the work pieces to be welded. In an exemplary embodiment of the present invention, pulse welding is employed. The welding waveform is controlled by the welding power supply 152 in accordance with known methods and need not be described in detail herein.

To address the arc stability issues described above relating to welding in narrow and deep welding gaps, embodiments of the present invention employ a magnetic field, generated by the coil 117, to stabilize and manipulate the arc. Specifically, an electrical signal is generated by a magnetic field control device 153 which contains a magnetic arc control system. The use of magnetic arc control systems in the welding industry are known and will not be described in detail. In embodiments of the present invention, this device 153 is integral with the welding power supply 152. However, this is not necessary as the device 153 can be a separate operational device. In either instance, the magnetic arc control system within the device 153 provides the proper magnetic field to the probe 107 to manipulate the arc. In operation, the device provides an electrical current to the coil 117 to generate a magnetic field in the coil 117 which is also provided to the probe 107 and/or the tube 105 and nozzle 106 by virtue of the connection to the probe. This magnetic field can affect the stability and positioning of the welding arc. The intensity, frequency and polarity of the magnetic field are employed to manipulate the arc to achieve the desired weld parameters. For example, by varying both the intensity and polarity of the magnetic field of the probe 107 the welding arc can be moved from side to side in the welding gap. This control allows for the system to manipulate the arc such that consistent sidewall penetration is achieved during welding. Moreover, the frequency and intensity can be controlled to stabilize the arc to provide a consistent and well controlled welding operation. Prior to this invention, this could not be consistently achieved in narrow gap thick walled welding operations.

Thus, various embodiments of the present invention can provide various types of welding arc manipulation to optimize a welding operation. Specifically, embodiments of the present invention can provide arc stabilization, arc oscillation and/or a high frequency magnetic stir of the welding arc. For arc stabilization, embodiments of the present invention employ a magnetic field to maintain the welding arc in one location or position to prevent arc blow, or otherwise to provide a consistent weld and to prevent the arc from wandering in the welding operation. For arc oscillation, embodiments of the present invention employ the magnetic field is used to manipulate the arc from side-to-side within the weld gap to ensure consistent sidewall penetration and controlling the distribution of heat during welding. For high frequency magnetic stirring of the arc, embodiments of the present invention employ magnetic fields agitate and stir the weld puddle to create a more fluid weld puddle during welding. This agitation can aid in floating out impurities and porosity from the weld puddle. This magnetic stirring can also enable a higher wire feed speed and deposition rate during welding.

In various embodiments of the present invention, it is contemplated that the unit 100 and weld head 200 traveling along a single path during welding, for example to make a single pass. However, in further embodiments of the present invention, it is also contemplated that the unit 100 and weld head 200 can be mechanically oscillated during welding. This can be done to further enhance the weld pool stirring discussed above.

Moreover, embodiments of the present invention are not limited to the relative positioning of the unit 100 and the weld head 200. For example, in some exemplary embodiments the unit 100 is on the leading side of the weld head 200 (that is on the upstream side of the welding arc), while in other exemplary embodiments the unit 100 is on the trailing side of the weld head 200.

The operation of the device 153 can be manual, such that an operator can control the magnetic field to manipulate the welding arc, or it can be automatic based on data/information from the welding power source. That is, it is within the scope of the present invention that the welding power supply 152 and the magnetic field control device 153 work together, via the use of programming, etc., to move the welding arc as desired and/or stabilize the arc during welding.

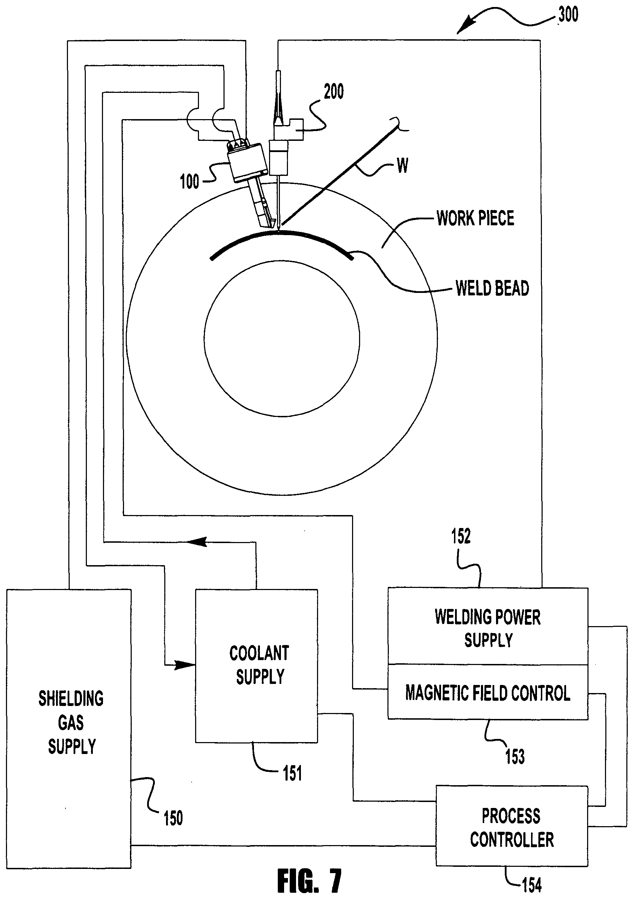

Figure 7 depicts a welding system 300 in accordance with an embodiment of the present invention, in which a welding power supply 152 provides a welding waveform to the weld head 200, and a magnetic field control device 153 provides an electrical signal to the unit 100 which generates a magnetic field near the arc to manipulate and stabilize it. The welding power supply 152 can be of any known configuration. Additionally, the present invention can be utilized in either an automatic, robotic or semi-automatic welding cell. The present invention is not limited in this regard. A process controller 154 can be employed to control, manage and synchronize the overall operation of the system 300. Specifically, the process controller 154 (containing memory, a central processing unit, a control panel, etc.) is used to control the welding power supply 152 and the magnetic field control device 153 to ensure that a proper weld is created. The magnetic field control device 153, controlled by the process controller 154 synchronizes magnetic arc deflection with all other welding processes. Specifically, arc current, arc voltage and wire feed speed (for example) are all synchronized with magnetic arc oscillation. This control, management and synchronization can be done either manually, with the user controlling various aspects of welding operation, including the welding arc and the magnetic field, or it can be done automatically where the process controller 154 manages the power supply 153 and magnetic field control device 153 autonomously. Further, the process controller 154 can also control the travel of the unit 100 and weld head 200. In addition to controlling aspects of the welding process, the process controller 154 can also monitor various aspects of the welding operation, including: properties of the welding arc; coolant flow and level; shielding gas flow and levels; the unit 100; the magnetic field generated by the probe 107; etc.

Further, a shielding gas supply system 150 is provided which provides a shielding gas (under the appropriate pressure and flow rate) to the unit 100 which delivers the shielding gas to the arc zone via the nozzle 106. The shielding gas system 150 can contain a source of shielding gas, such as a tank, and a flow regulation monitoring system, such as through a flow regulator known in the welding industry.

Additionally, a coolant supply system 151 is provided. The coolant supply system 151 provides a coolant, such as water, oil, or other thermally conductive liquid to the unit 100 where it provides for the cooling of the unit 100 and components therein. In an exemplary embodiment of the present invention, the coolant supply system 151 can contain a supply tank and a pump mechanism. However, in a further exemplary embodiment, the system 151 contains a cooling stage (not shown) which actively cools the coolant as it returns from the unit 100 to enhance the thermal exchange properties of the coolant.

Because of the attributes of the present invention, the shielding gas and the magnetic field are provided very near the arc and thus sufficiently shield, stabilize and manipulate the arc when welding narrow gap thick work pieces, unlike in prior systems.

It is noted that the present invention is not limited to the use of TIG welding, but can be used with in any industry or application requiring a controlled and shielded welding arc.

While the invention has been particularly shown and described with reference to exemplary embodiments thereof, the invention is not limited to these embodiments. It will be understood by those of ordinary skill in the art that various changes in form and details may be made therein without departing from the scope of the invention as defined by the following claims.

**Reference numbers:**

| | | | |
|---|---|---|---|
| 100 | manipulation unit | 121 | magnetic laminate |
| 101 | housing | 122 | magnetic laminate |
| 103 | support | 126 | manifold structure |
| 105 | shielding gas tube | 130 | stabilizers |
| 106 | nozzle | 150 | supply system |
| 107 | probe | 152 | power supply |
| 109 | gas inlet | 153 | control device |
| 111 | electric conduit inlet | 154 | process controller |
| 113 | bracket structure | 200 | welding head |
| 115 | coolant tube inlet | 201 | torch head |
| 116 | coolant tube outlet | 203 | gas cup |
| 117 | magnet coil | 205 | electrode |
| 118 | potting compound | 207 | electrical connection |
| 120 | magnetic laminate | 300 | welding system |

## Claims

1. A welding arc manipulation unit, comprising:
a support structure or support (103) which supports a magnetic coil (117) which generates a magnetic field in response to an electrical current;
one magnetic field probe (107) magnetically coupled to said magnetic coil (117) and extending below said support structure such that said magnetic probe (107) can extend into a welding gap to deliver a magnetic field to affect stability and positioning of a welding arc;
one shielding gas tube (105) coupled to and extending below said support structure such that said shielding gas tube (105) can extend into said welding gap to deliver shielding gas to said welding arc;
**characterized in that**
said magnetic field probe (107) is secured to the back or front of the shielding gas tube (105).

2. The welding arc manipulation unit of claim 1, wherein said magnetic probe (107) is magnetically coupled to said shielding gas tube (105).

3. The welding arc manipulation unit of claim 1, wherein said magnetic field probe comprises a plurality of laminate plates or magnetic laminates (120, 121, 122) secured to each other.

4. The welding arc manipulation unit of claim 3, wherein at least some of said laminate plates have different lengths from other of said laminate plates.

5. The welding arc manipulation unit of anyone of the claims 1 to 4, further comprising a housing (101) which encloses said coil.

6. The welding arc manipulation unit of anyone of the claims 1 to 5, wherein at least one of a housing (101) which encloses said coil and said support structure comprises a coolant manifold structure (126) to allow for the flow of a coolant through said coolant manifold structure.

7. The welding arc manipulation unit of anyone of the claims 1 to 6, wherein at least one of said magnetic probe and said shielding gas tube and/or at least some of said laminate plates is made from a high silicon steel.

8. The welding arc manipulation unit of anyone of the claims 1 to 7, wherein said magnetic coil (117) is at least partially encased in a thermally absorbent potting material or potting compound (118).

9. The welding arc manipulation unit of anyone of the claims 1 to 8, wherein said magnetic probe (107) and/or the shielding gas tube (105) has a thickness near said support structure which is larger than a thickness at a point away from said support structure.

10. A welding system, comprising:
a welding power supply (152) coupled to a welding head (200) which generates a welding arc between an electrode (205) and a workpiece;
a magnetic field control device (153); and
a welding arc manipulation unit, according to one of the claims 1 to 9 wherein:
the electrical current for the magnetic coil is provided by the magnetic field control device.

11. The welding system of claim 10, further comprising a coolant system coupled to said welding arc manipulation unit to cool said welding arc manipulation unit.

12. The welding system of claim 10 or 11, further comprising a shielding gas system coupled to said welding arc manipulation unit to provide a shielding gas to said shielding gas tube.

13. The welding system of anyone of the claims 10 to 12, wherein said power supply is a tungsten inert gas welding process power supply.

## Patentansprüche

1. Schweißlichtbogenmanipulationseinheit, die Folgendes umfasst:
eine Stützstruktur oder Stütze (103), die eine Magnetspule (117) stützt, die in Reaktion auf einen elektrischen Strom ein Magnetfeld erzeugt;
eine Magnetfeldsonde (107), die magnetisch mit der Magnetspule (117) gekoppelt ist und sich unter der Stützstruktur dergestalt erstreckt, dass sich die Magnetsonde (107) in einen Schweißspalt hinein erstrecken kann, um ein Magnetfeld abzugeben, um die Stabilität und die Position eines Schweißlichtbogens zu beeinflussen;
ein Schutzgasrohr (105), das mit der Stützstruktur gekoppelt ist und sich so unter der Stützstruktur erstreckt, dass sich das Schutzgasrohr (105) in den Schweißspalt hinein erstrecken kann, um Schutzgas zu dem Schweißlichtbogen zu leiten;
**dadurch gekennzeichnet, dass**
die Magnetfeldsonde (107) an der Rückseite oder der Vorderseite des Schutzgasrohrs (105) gesichert ist.

2. Schweißlichtbogenmanipulationseinheit nach Anspruch 1, wobei die Magnetsonde (107) magnetisch mit dem Schutzgasrohr (105) gekoppelt ist.

3. Schweißlichtbogenmanipulationseinheit nach Anspruch 1, wobei die Magnetfeldsonde mehrere Laminatplatten oder magnetische Laminate (120, 121, 122) umfasst, die aneinander befestigt sind.

4. Schweißlichtbogenmanipulationseinheit nach Anspruch 3, wobei mindestens einige der Laminatplatten andere Längen haben als andere der Laminatplatten.

5. Schweißlichtbogenmanipulationseinheit nach einem der Ansprüche 1 bis 4, die des Weiteren ein Gehäuse (101) umfasst, das die Spule umschließt.

6. Schweißlichtbogenmanipulationseinheit nach einem der Ansprüche 1 bis 5, wobei ein Gehäuse (101), das die Spule umschließt, und/oder die Stützstruktur eine Kühlmittelverteilerrohrstruktur (126) umfassen, um das Strömen eines Kühlmittels durch die Kühlmittelverteilerrohrstruktur zu gestatten.

7. Schweißlichtbogenmanipulationseinheit nach einem der Ansprüche 1 bis 6, wobei die Magnetsonde und/oder das Schutzgasrohr, und/oder mindestens einige der Laminatplatten aus einem siliziumreichen Stahl bestehen.

8. Schweißlichtbogenmanipulationseinheit nach einem der Ansprüche 1 bis 7, wobei die Magnetspule (117) mindestens teilweise in einem wärmeabsorbierenden Vergussmaterial oder einer wärmeabsorbierenden Vergussmasse (118) umschlossen ist.

9. Schweißlichtbogenmanipulationseinheit nach einem der Ansprüche 1 bis 8, wobei die Magnetsonde (107) und/oder das Schutzgasrohr (105) eine Dicke nahe der Stützstruktur aufweisen, die größer ist als eine Dicke an einem Punkt, der von der Stützstruktur entfernt liegt.

10. Schweißsystem, das Folgendes umfasst:
eine Schweißstromversorgung (152), die mit einem Schweißkopf (200) gekoppelt ist, der einen Schweißlichtbogen zwischen einer Elektrode (205) und einem Werkstück erzeugt;
eine Magnetfeldsteuervorrichtung (153), und
eine Schweißlichtbogenmanipulationseinheit nach einem der Ansprüche 1 bis 9, wobei:
der elektrische Strom für die Magnetspule durch die Magnetfeldsteuervorrichtung bereitgestellt wird.

11. Schweißsystem nach Anspruch 10, das des Weiteren ein Kühlmittelsystem umfasst, das mit der Schweißlichtbogenmanipulationseinheit gekoppelt ist, um die Schweißlichtbogenmanipulationseinheit zu kühlen.

12. Schweißsystem nach Anspruch 10 oder 11, das des Weiteren ein Schutzgassystem umfasst, das mit der Schweißlichtbogenmanipulationseinheit gekoppelt ist, um ein Schutzgas zu dem Schutzgasrohr zu leiten.

13. Schweißsystem nach einem der Ansprüche 10 bis 12, wobei die Stromversorgung eine Stromversorgung für einen Wolfram-Inertgas-Schweißprozess ist.

## Revendications

1. Unité de manipulation d'arc de soudage, comprenant :
une structure de support ou un support (103) qui supporte une bobine magnétique (117) qui génère un champ magnétique en réponse à un courant électrique ;
une sonde de champ magnétique (107) couplée magnétiquement à ladite bobine magnétique (117) et s'étendant au-dessous de ladite structure de support de sorte que ladite sonde magnétique (107) puisse s'étendre dans un espacement de soudage pour délivrer un champ magnétique afin d'affecter une stabilité et un positionnement d'un arc de soudage ;
un tube de gaz de protection (105) couplé à ladite structure de support et s'étendant au-dessous de celle-ci de sorte que ledit tube de gaz de protection (105) puisse s'étendre dans ledit espacement de soudage pour délivrer un gaz de protection au dit arc de soudage ;
**caractérisée en ce que**
ladite sonde de champ magnétique (107) est fixée à l'arrière ou à l'avant du tube de gaz de protection (105).

2. Unité de manipulation d'arc de soudage selon la revendication 1, dans laquelle ladite sonde magnétique (107) est couplée magnétiquement au dit tube de gaz de protection (105).

3. Unité de manipulation d'arc de soudage selon la revendication 1, dans laquelle ladite sonde de champ magnétique comprend une pluralité de plaques stratifiées ou de stratifiés magnétiques (120, 121, 122) fixés l'un à l'autre.

4. Unité de manipulation d'arc de soudage selon la revendication 3, dans laquelle au moins certaines desdites plaques stratifiées ont des longueurs différentes de celles d'autres desdites plaques stratifiées.

5. Unité de manipulation d'arc de soudage selon l'une quelconque des revendications 1 à 4, comprenant en outre un boîtier (101) qui renferme ladite bobine.

6. Unité de manipulation d'arc de soudage selon l'une quelconque des revendications 1 à 5, dans laquelle au moins l'un d'un boîtier (101) qui renferme ladite bobine et de ladite structure de support comprend une structure de collecteur de liquide de refroidissement (126) pour permettre l'écoulement d'un liquide de refroidissement à travers ladite structure de collecteur de liquide de refroidissement.

7. Unité de manipulation d'arc de soudage selon l'une quelconque des revendications 1 à 6, dans laquelle au moins l'un de ladite sonde magnétique et dudit tube de gaz de protection et/ou d'au moins certaines desdites plaques stratifiées est constitué d'un acier à forte teneur en silicium.

8. Unité de manipulation d'arc de soudage selon l'une quelconque des revendications 1 à 7, dans laquelle ladite bobine magnétique (117) est au moins partiellement encastrée dans un matériau ou composé d'enrobage thermiquement absorbant (118).

9. Unité de manipulation d'arc de soudage selon l'une quelconque des revendications 1 à 8, dans laquelle ladite sonde magnétique (107) et/ou le tube de gaz de protection (105) ont une épaisseur à proximité de ladite structure de support qui est supérieure à une épaisseur à un point éloigné de ladite structure de support.

10. Système de soudage, comprenant :
une alimentation électrique de soudage (152) couplée à une tête de soudage (200) qui génère un arc de soudage entre une électrode (205) et une pièce d'ouvrage ;
un dispositif de commande de champ magnétique (153) ; et
une unité de manipulation d'arc de soudage selon l'une des revendications 1 à 9 dans laquelle :
le courant électrique pour la bobine magnétique est fourni par le dispositif de commande de champ magnétique.

11. Système de soudage selon la revendication 10, comprenant en outre un système de liquide de refroidissement couplé à ladite unité de manipulation d'arc de soudage pour refroidir ladite unité de manipulation d'arc de soudage.

12. Système de soudage selon la revendication 10 ou 11, comprenant en outre un système de gaz de protection couplé à ladite unité de manipulation d'arc de soudage pour fournir un gaz de protection au dit tube de gaz de protection.

13. Système de soudage selon l'une quelconque des revendications 10 à 12, dans lequel ladite alimentation électrique est une alimentation électrique de processus de soudage au tungstène et à gaz inerte.
